# EUROPEAN PATENT APPLICATION

(11) **EP 0 589 640 A1**
(43) Date of publication of application: **30.03.1994**
(21) Application number: 93307378.5
(22) Date of filing: 17.09.1993
(51) Int. Cl.: C08J 5/04, C08L 69/00, C08L 67/02, C08K 7/02

(54) **Macrocyclic molding compositions**

(30) Priority: 24.09.1992 US 949949
(71) Applicant: GENERAL ELECTRIC COMPANY, Schenectady, NY 12345 (US)
(72) Inventor: McAlea, Kevin Patrick, Half Moon, New York 12065 (US); Cook, Todd Duncan, Hilliard, Ohio 43026 (US)
(74) Representative: Pratt, Richard Wilson

(57) **Abstract**

Compositions comprising macrocyclic oligomers, linear polymers having the same units as said macrocyclic oligomers, fibers and macrocyclic oligomer polymerization catalysts having a viscosity in the range of about 100-1200 poise at the molding temperature may be compression molded at pressures in the range of about 0.5-7.0 MPa. Molding under these conditions is particularly useful for the formation of large parts.

## Description

This invention relates to compression molding, and more particularly to new fiber-reinforced thermoplastic resinous compositions for use therein.

In compression molding, a resinous material is charged, typically in sheet or bulk form, to a heated mold, which is then closed as heating is continued to cause the resin to flow to the desired shape. Relatively high pressures, typically on the order of 13.5-28 MPa., are often employed. However, for compression molding of large parts, such as automobile body parts, it is desirable to operate at lower pressures, typically about 0.5-7.0 MPa.

It is also desirable to develop compression molding techniques suitable for use with fiber-reinforced resinous materials in which the fibers have an aspect ratio (i.e., ratio of length to diameter) intermediate between the relatively low values encountered in injection molding and the high values characteristic of continuous fiber-reinforced resinous systems. Injection molding is frequently employed with fiber-reinforced resins, but the extrusion and injection operations cause a reduction in fiber length to the point where the molded parts are frequently brittle. For the molding of thermoplastic stampable sheets comprising resin-impregnated fibrous mats, relatively high pressures are required; in addition, there is frequently poor wet-out of the fibers with the resin, with the result that voids may be formed and the strength of the resulting molded article is low.

For successful compression molding of a fiber-reinforced resinous material, it is necessary for the fibers to flow uniformly with the resin upon application of molding pressure. This requires close control of the viscosity of the resinous material. Preferred viscosities are generally in the range of about 100-1200 poise at the temperature of molding. This is a substantially lower viscosity than that of most fully polymerized thermoplastics.

The use of macrocyclic oligomer compositions in combination with fibrous and other reinforcing media for the preparation of resinous composites is disclosed, for example, in U.S. Patent 4,740,583 and copending, commonly owned application Serial No. 07/700,839. The fibers are generally long continuous or short chopped fibers, which will often not be satisfactory for compression molding. Moreover, the viscosities of the macrocyclic oligomer compositions are usually too low to promote flow of fibers of intermediate aspect ratio with said compositions. For example, typical macrocyclic bisphenol A polycarbonate oligomers have a viscosity of about 10 poise at 250°C.

The present invention is based on the discovery that macrocyclic oligomer compositions can be employed as constituents in thermoplastic compositions suitable for use in compression molding operations. More particularly, blends of macrocyclic oligomers and linear polymers containing the same structural units as the oligomers have excellent viscosity for compression molding, since their combination with fibers of the proper length produces a material in which the fibers flow with the resin under compression molding conditions. Upon polymerization of the cyclics under molding conditions, tough fibrous composites are obtained in relatively short molding cycles.

In one of its aspects, therefore, the invention includes fiber-reinforced resinous compositions suitable for compression molding to thermoplastic articles, said compositions comprising:
(A) a resinous base comprising (A-1) a macrocyclic oligomer composition capable of conversion to a linear polymer, and (A-2) a high molecular weight linear polymer comprising structural units identical to those in said macrocyclic oligomer composition, said linear polymer being present in an effective amount to maintain the viscosity of said fiber-reinforced composition in the range of about 100-1200 poise at the temperature of molding;
(B) about 15-50% by weight, based on the total of components A and B, of fibers having an aspect ratio in the range of about 500-800; and
(C) a macrocyclic oligomer polymerization catalyst in an amount effective to polymerize said oligomer composition upon application of heat.

Component A in the compositions of this invention is in two parts, the first part (component A-1) comprising a macrocyclic oligomer composition capable of conversion to a linear polymer. Any of the known macrocyclic oligomers may be employed.

Included are the polycarbonate, polyarylate and poly(alkylene dicarboxylate) oligomers disclosed in U.S. Patents 4,740,583, 4,829,144 and 5,039,783. Other oligomers of these types are disclosed in U.S. Patents 4,920,200 and 4,980,453. In addition, the macrocyclic hetereocarbonates of U.S. Patent 4,696,998 may be employed; they contain carbonate structural units in combination with units containing such moieties as amide, ester, ether, ether imide, ether ketone, ether ester, ether sulfone, urethane, urea, amideimide, sulfide, sulfone, orthocarbonate, ortho ester, sulfonamide, imidazole, benzoxazole, benzothiazole, phosphate, phosphite, phosphoramidate, phosphonate and phosphazene groups.

In addition, various types of macrocyclic oligomer molecules containing other than carbonate or ester structural units may be employed. Many of these, particularly including spiro(bis)indane moieties, are disclosed in the aforementioned U.S. Patent 4,980,453. They include macrocyclic polyamides, polyimides, polyamideimides, polyetherketones and polyethersulfones. The aforementioned patents disclosing said macrocyclic oligomers are incorporated herein by reference. Mixtures of macrocyclic oligomers having identical structural units and differing degrees of polymerization are most often employed, since they are conveniently prepared without the necessity for separating one oligomer from another. Moreover, they generally have low viscosity in the liquid state and are therefore easy to process.

In most instances, the preferred macrocyclic oligomer compositions employed in the invention are macrocyclic polycarbonate and poly(alkylene dicarboxylate) oligomers. Oligomers of these types often impart particularly advantageous properties to the compositions incorporating them, especially after polymerization of the macrocyclic oligomers to linear polycarbonates or polyesters.

Suitable macrocyclic polycarbonate oligomer compositions include those comprising a plurality of structural units of the formula 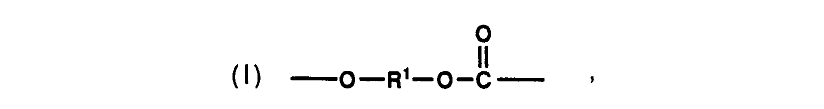
wherein at least about 60% of the total number of R¹ values are divalent aromatic organic radicals, the balance thereof being aliphatic, alicyclic or aromatic organic radicals. Such compositions include dimers, trimers and tetramers, as well as cyclic polycarbonate oligomer mixtures.

The R¹ values may be different but are usually the same, and may be aliphatic, alicyclic, aromatic or mixed; those which are aliphatic or alicyclic generally contain up to about 8 carbon atoms. Suitable R¹ values include ethylene, propylene, trimethylene, tetramethylene, hexamethylene, dodecamethylene, 1,4-(2-butenylene), 1,10-(2-ethyldecylene), 1,3-cyclopentylene, 1,3-cyclohexylene, 1,4-cyclohexylene, m-phenylene, p-phenylene, 4,4'-biphenylene, 2,2-bis(4-phenylene)propane, benzene-1,4-dimethylene (which is a vinylog of the ethylene radical and has similar properties) and similar radicals such as those which correspond to the dihydroxy compounds disclosed by name or formula (generic or specific) in U.S. Patent 4,217,438, the disclosure of which is also incorporated by reference herein. Also included are radicals containing nonhydrocarbon moieties. These may be substituents such as chloro, nitro, alkoxy and the like, and also linking radicals such as thio, sulfoxy, sulfone, ester, amide, ether and carbonyl. Most often, however, all R¹ radicals are hydrocarbon radicals.

Preferably at least about 80% of the total number of R¹ values in the cyclic oligomer mixtures, and most desirable all of said R¹ values, are aromatic. The aromatic R¹ radicals preferably have the formula

(II) -A¹-Y -A²- ,

wherein each of A¹ and A² is a monocyclic divalent aromatic radical and Y is a bridging radical in which one or two atoms separate A¹ from A². The free valence bonds in formula II are usually in the meta or para positions of A¹ and A² in relation to Y.

In formula II, the A¹ and A² values may be unsubstituted phenylene or substituted derivatives thereof, illustrative substituents (one or more) being alkyl, alkenyl, halo (especially chloro and/or bromo), nitro, alkoxy and the like. Unsubstituted phenylene radicals are preferred. Both A¹ and A² are preferably p-phenylene, although both may be o- or m-phenylene or one o- or m-phenylene and the other p-phenylene.

The bridging radical, Y, is one in which one or two atoms, preferably one, separate A¹ from A². It is most often a hydrocarbon radical and particularly a saturated radical such as methylene, cyclohexylmethylene, 2-[2.2.1]-bicycloheptylmethylene, ethylene, isopropylidene, neopentylidene, cyclohexylidene, cyclopentadecylidene, cyclododecylidene or adamantylidene, especially a gemalkylene (alkylidene) radical. Also included, however, are unsaturated radicals and radicals which contain atoms other than carbon and hydrogen; for example, 2,2-dichloroethylidene, carbonyl, phthalidylidene, oxy, thio, sulfoxy and sulfone. For reasons of availability and particular suitability for the purposes of this invention, the preferred radical of formula II is the 2,2-bis(4-phenylene)propane radical, which is derived from bisphenol A and in which Y is isopropylidene and A¹ and A² are each p-phenylene.

Suitable macrocyclic poly(alkylene dicarboxylate) oligomers include those comprising structural units of the formula 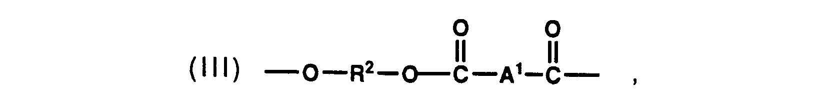
wherein R² is an alkylene or mono- or polyoxyalkylene radical containing a straight chain of about 2-8 atoms and A¹ is as previously defined. Most often, R² is a C₂₋₆ alkylene radical, especially ethylene or tetramethylene, and A¹ is m- or p-phenylene. The macrocyclic poly(butylene terephthalate) and poly(ethylene terephthalate) oligomers are often preferred by reason of their excellent solvent resistance, relatively low polymerization temperatures and capability for isothermal molding.

Macrocyclic oligomer mixtures of the above-defined types, and especially the polycarbonate and polyester oligomers, usually consist essentially of oligomers having degrees of polymerization from 2 to about 30 and preferably to about 20, with a major proportion being up to about 12 and a still larger proportion up to about 15. Since they are mixtures of oligomers having varying degrees of polymerization, these compositions have relatively low melting points as compared to single compounds such as the corresponding cyclic trimer. The cyclic oligomer mixtures are generally liquid at temperatures above 300°C and most often at temperatures above 225°C.

Component A-2 is a high molecular weight linear polymer comprising structural units identical to those in component A-1. Thus, a linear bisphenol A polycarbonate should be employed when component A-1 comprises bisphenol A polycarbonate oligomers, a linear poly(butylene terephthalate) when component A-1 comprises macrocyclic poly(butylene terephthalate) oligomers, and so forth. The employment of similar or identical macrocyclic and linear copolymer materials is also within the scope of the invention.

The molecular weight and proportion of the linear polymer in component A are adjusted to maintain the viscosity of the fiber-reinforced resinous composition in the range of about 100-1200 poise at the molding temperature. In the case of macrocyclic polycarbonate oligomers, a typical molding temperature is on the order of 250°C. Those skilled in the art will readily be able to determine by simple experimentation the optimum molding temperatures for other macrocyclic oligomer compositions, and likewise the proportion of linear polymer to employ. For most known polycarbonates and especially bisphenol A polycarbonates, said proportion is generally in the range of about 15-40% by weight based on total component A.

Component B consists of fibers having an aspect ratio in the range of about 500-800. Typical fibrous materials which may be employed include carbon, glass, boron and fibrous polymers such as highly oriented polyamide. Carbon and glass fibers are frequently preferred, with carbon fibers being advantageous when a particularly stiff composite article is desired. Said fibers comprise about 15-50% and preferably about 20-40% by weight of the total of components A and B.

Component C is a macrocyclic oligomer polymerization catalyst. It may be any of the catalysts effective for polymerization of the macrocyclic oligomers employed as component A-1. Suitable initiators are listed in the above-identified patents incorporated by reference herein, as well as in other patents. They may be employed in conventional quantities based on the proportion of macrocyclic oligomers in the blend.

Illustrative catalysts are lithium salicylate and alkali metal and ammonium tetraphenylborates for macrocyclic polycarbonate oligomers, and lithium salicylate, di-n-butyltin oxide and 2,2-di-n-butyl-2-stanna-1,3-dioxacycloheptane for macrocyclic poly(alkylene dicarboxylate) oligomers. The concentration of polymerization initiator will usually be about 0.01-1.0 and preferably about 0.05-0.2 mole percent, based on structural units in the oligomers.

The compositions of this invention may be prepared by conventional blending methods. Dry blending is often employed. Alternatively, the components may be dissolved in a suitable solvent such as methylene chloride, facilitating intimate blending, and the solvent may then be removed by evaporation, typically under reduced pressure.

Another aspect of the invention is a method for producing a fiber-reinforced thermoplastic article. Said method comprises the steps of:
(I) forming a composition as described hereinabove;
(II) charging said composition to a mold; and
(III) compression molding said composition at a temperature effective to convert the macrocyclic oligomer composition to a linear polymer and at a pressure in the range of about 0.5-7.0 MPa.

The mold to which the composition is charged in step II may be any mold suitable for use in compression molding. For example, a matched die mold may be employed.

When the composition has been charged to the mold, in step III the mold is closed and said composition subjected to pressure in the above-noted range. The mold is maintained at a temperature effective to convert the macrocyclic oligomers to linear polymer, typically in the range of about 250-300°C. Under these conditions, the resin and reinforcing material flow uniformly to fill the mold and the cyclic oligomers undergo ring-opening polymerization. The resulting resinous article may be removed from the mold upon cooling.

The invention is illustrated by an example in which a mixture of 72% (by weight) macrocyclic bisphenol A polycarbonate oligomers and 28% linear bisphenol A polycarbonate and having a viscosity at 250°C of about 1000 poise was employed. Said mixture was dry blended with 0.1 mole percent (based on structural units in the cyclic oligomers) lithium salicylate and 30 weight percent, based on total linears and cyclics, E-glass fibers about 6.4 mm. long, having an aspect ratio between 500 and 800. The blend was pressed into three cakes, 127 x 89 x 3.2 mm., using a matched die tool; the cakes had a chalk-like consistency.

A matched die tool, 241 x 140 mm., was preheated to 275°C and the three cakes were stacked in the center. The mold was closed, maintained at ambient pressure for 2 minutes to melt the resin mixture and then pressed for 25 minutes at 0.7 MPa.; during the first 30 seconds after the application of pressure, the molten composite filled the mold. Finally, the mold was cooled to room temperature and the sample was removed. It was found by microscopy to be void-free and had a flexural strength of 51.7 MPa., a flexural modulus of 103.4 GPa., a strain to failure of 2.6% and a Dynatup impact energy of 1.8 kg./cm.². The weight average molecular weight of the polycarbonate therein, as determined by gel permeation chromatography, was 88,000.

In a control, a sample of linear polymer-free bisphenol A cyclic polycarbonate oligomers having a viscosity of 10 poise at 250°C was subjected to the same molding conditions. The molded part had glass only in the center, although the entire mold was filled with linear polycarbonate.

## Claims

1. A fiber-reinforced resinous composition suitable for compression molding to a thermoplastic article, said composition comprising:
(A) a resinous base comprising (A-1) a macrocyclic oligomer composition capable of conversion to a linear polymer, and (A-2) a high molecular weight linear polymer comprising structural units identical to those in said macrocyclic oligomer composition, said linear polymer being present in an effective amount to maintain the viscosity of said fiber-reinforced composition in the range of about 100-1200 poise at the molding temperature;
(B) about 15-50% by weight, based on the total of components A and B, of fibers having an aspect ratio in the range of about 500-800; and
(C) a macrocyclic oligomer polymerization catalyst in an amount effective to polymerize said oligomer composition upon application of heat.

2. A composition according to claim 1 wherein the macrocyclic oligomers are polycarbonate or poly(alkylene dicarboxylate) oligomers.

3. A composition according to claim 1 or claim 2 wherein the fibers are carbon, glass or boron fibers or fibrous polymers.

4. A composition according to claim 3 wherein the fibers are glass fibers.

5. A composition according to any preceding claim wherein the fibers comprise about 20-40% by weight of the total of components A and B.

6. A composition according to any preceding claim wherein the macrocyclic oligomers are aromatic polycarbonate oligomers.

7. A composition according to claim 6 wherein the macrocyclic oligomers are bisphenol A polycarbonate oligomers.

8. A composition according to any one of claims 1 to 5 wherein the macrocyclic oligomers are poly(butylene terephthalate) oligomers.

9. A method for producing a fiber-reinforced thermoplastic article, said method comprising the steps of:
(I) forming a composition comprising:
(A) a resinous base comprising (A-1) a macrocyclic oligomer composition capable of conversion to a linear polymer, and (A-2) a high molecular weight linear polymer comprising structural units identical to those in said macrocyclic oligomer composition, said linear polymer being present in an effective amount to maintain the viscosity of said fiber-reinforced composition in the range of about 100-1200 poise at 250°C;
(B) about 15-50% by weight, based on the total of components A and B, of fibers having an aspect ratio in the range of about 500-800; and
(C) a macrocyclic oligomer polymerization catalyst in an amount effective to polymerize said oligomer composition upon application of heat;
(II) charging said composition to a mold; and
(III) compression molding said composition at a temperature effective to convert the macrocyclic oligomer composition to a linear polymer and at a pressure in the range of about 0.5-7.0 MPa.

10. A method according to claim 9 wherein the macrocyclic oligomers are polycarbonate or poly(alkylene dicarboxylate) oligomers.

11. A method according to claim 9 or claim 10 wherein the fibers are carbon, glass or boron fibers or fibrous polymers.

12. A method according to claim 11 wherein the fibers are glass fibers.

13. A method according to any one of claims 9 to 12 wherein the fibers comprise about 20-40% by weight of the total of components A and B.

14. A method according to any one of claims 9 to 13 wherein the macrocyclic oligomers are aromatic polycarbonate oligomers.

15. A method according to any one of claims 9 to 14 wherein the molding temperature is about 250°C.

16. A method according to any one of claims 9 to 13 wherein the macrocyclic oligomers are bisphenol A polycarbonate oligomers.

17. A method according to any one of claims 9 to 13 wherein the macrocyclic oligomers are poly(butylene terephthalate) oligomers.
